# EUROPEAN PATENT APPLICATION

(11) **EP 4 270 528 A1**
(43) Date of publication of application: **01.11.2023**
(21) Application number: 21910183.9
(22) Date of filing: 01.12.2021
(51) Int. Cl.: H01M 4/131, H01M 4/525, H01M 4/62

(54) **POSITIVE ELECTRODE FOR NON-AQUEOUS ELECTROLYTE SECONDARY BATTERY AND NON-AQUEOUS ELECTROLYTE SECONDARY BATTERY**

(30) Priority: 25.12.2020 JP 2020216665
(71) Applicant: Panasonic Intellectual Property Management Co., Ltd., Osaka-shi, Osaka 540-6207 (JP)
(72) Inventor: KO, Takashi, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2021/044107
(87) International publication number: WO 2022/138031

(57) **Abstract**

Provided is a positive electrode active substance that increases the discharge capacity of a battery. This positive electrode for a non-aqueous electrolyte secondary battery comprises a positive electrode current collector and a positive electrode mixture layer formed on the surface of the positive electrode current collector. The positive electrode mixture layer contains: a positive electrode active substance that includes a lithium transition metal complex oxide with a layered halite structure; and a phosphate. The lithium transition metal complex oxide contains at least nickel and aluminum, and calcium and/or strontium; the content ratio of nickel in the lithium transition metal complex oxide is at least 75 mol% relative to the total amount of metal elements other than lithium; and the phosphate content of the positive electrode mixture layer, if the positive electrode active substance content is 100 parts by mass, is 0.1-5 parts by mass.

## Description

### TECHNICAL FIELD

The present disclosure relates to a positive electrode for a non-aqueous electrolyte secondary battery and a non-aqueous electrolyte secondary battery.

### BACKGROUND

In recent years, as a secondary battery having high output and high capacity, a non-aqueous electrolyte secondary battery that includes a positive electrode, a negative electrode, and a non-aqueous electrolyte and performs charging and discharging by moving lithium ions and the like between the positive electrode and the negative electrode has been widely used. Patent Literature 1 discloses a lithium ion secondary battery including an electrolyte containing a lithium imide-based compound and a positive electrode containing Ni and other elements such as Al and Co. In addition, Patent Literature 1 describes that a mixture density is increased by controlling conditions for rolling the positive electrode.

### CITATION LIST

### PATENT LITERATURE

Patent Literature 1: Japanese Unexamined Patent Application Publication No. 2008-210767 A

### SUMMARY

### TECHNICAL PROBLEM

A lithium transition metal composite oxide contained in a positive electrode active material is designed to increase a content ratio of Ni in order to obtain a high discharge capacity. However, in a battery containing a high-Ni-containing lithium transition metal composite oxide, a discharge capacity may not be improved even in a case where a charge capacity is improved. The technique of Patent Literature 1 has not considered the improvement of the discharge capacity of the battery containing a high-Ni-containing lithium transition metal composite oxide, and there is still room for improvement.

Therefore, an object of the present disclosure is to provide a positive electrode active material for improving a discharge capacity of a battery.

### SOLUTION TO PROBLEM

According to one aspect of the present disclosure, a positive electrode for a non-aqueous electrolyte secondary battery includes a positive electrode current collector and a positive electrode mixture layer formed on a surface of the positive electrode current collector. The positive electrode mixture layer contains: a positive electrode active material containing a lithium transition metal composite oxide having a layered halite structure; and a phosphate, in which the lithium transition metal composite oxide contains at least Ni and Al, and at least one of Ca or Sr, a content ratio of Ni in the lithium transition metal composite oxide is greater than or equal to 75 mol% with respect to the total amount of metal elements excluding Li, and in the positive electrode mixture layer, a content of the phosphate is greater than or equal to 0.1 parts by mass and less than or equal to 5 parts by mass based on 100 parts by mass of a content of the positive electrode active material.

According to one aspect of the present disclosure, a non-aqueous electrolyte secondary battery includes the positive electrode for a non-aqueous electrolyte secondary battery, a negative electrode, and a non-aqueous electrolyte.

### ADVANTAGEOUS EFFECTS OF INVENTION

According to the positive electrode active material for a non-aqueous electrolyte secondary battery of one aspect of the present disclosure, a discharge capacity of the battery can be improved.

### BRIEF DESCRIPTION OF DRAWINGS

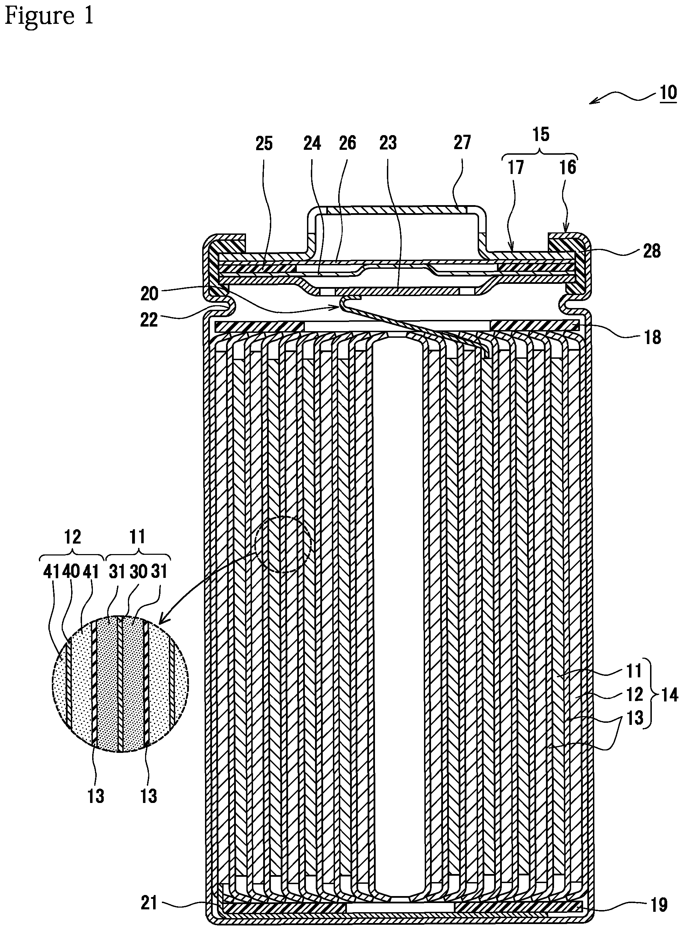

FIG. 1 is a vertical cross-sectional view of a non-aqueous electrolyte secondary battery as an example of an embodiment.

### DESCRIPTION OF EMBODIMENTS

A lithium transition metal composite oxide having a high content ratio of Ni of greater than or equal to 75 mol% with respect to the total amount of metal elements excluding Li has high activity in the vicinity of a particle surface and tends to be structurally unstable, and thus generation or erosion of a layer with a deteriorated surface easily occurs due to a reaction with an electrolyte or the like, and a discharge capacity may be reduced. In addition, in the lithium transition metal composite oxide, cracks occur during rolling, a conductive path cannot be taken inside the lithium transition metal composite oxide, and a portion that cannot contribute to charging and discharging is generated, such that the discharge capacity may be reduced. As a result of intensive studies on such problems, the present inventors have found that the discharge capacity can be specifically improved by adding at least one of Ca or Sr to a high-Ni-containing positive electrode active material and allowing a positive electrode mixture layer to contain a phosphate such as lithium phosphate (Li₃PO₄) together with a positive electrode active material. It is considered that the addition of Ca or Sr improves the particle strength of the lithium transition metal composite oxide to suppress the occurrence of cracks, and at the same time, to decompose the phosphate during charging, such that a coating film of a phosphorus compound is formed on a surface of the positive electrode active material to suppress a side reaction with the electrolyte, thereby improving the discharge capacity.

Hereinafter, an example of an embodiment of a non-aqueous electrolyte secondary battery according to the present disclosure will be described in detail. Hereinafter, a cylindrical battery in which a wound electrode assembly is housed in a cylindrical battery case will be exemplified, but the electrode assembly is not limited to the wound type, and may be a stacked type in which a plurality of positive electrodes and a plurality of negative electrodes are alternately stacked one by one with a separator interposed therebetween. In addition, the battery case is not limited to a cylindrical shape, and may be a square shape, a coin shape, or the like, or may be a battery case configured by a laminate sheet including a metal layer and a resin layer.

FIG. 1 is a cross-sectional view of a non-aqueous electrolyte secondary battery 10 as an example of an embodiment. As illustrated in FIG. 1, the non-aqueous electrolyte secondary battery 10 includes an electrode assembly 14, a non-aqueous electrolyte (not illustrated), and a battery case 15 housing the electrode assembly 14 and the non-aqueous electrolyte. The electrode assembly 14 has a wound structure in which a positive electrode 11 and a negative electrode 12 are wound with a separator 13 interposed therebetween. The battery case 15 includes a bottomed cylindrical exterior can 16 and a sealing assembly 17 for closing an opening of the exterior can 16.

The electrode assembly 14 includes the elongated positive electrode 11, the elongated negative electrode 12, two elongated separators 13, a positive electrode tab 20 joined to the positive electrode 11, and a negative electrode tab 21 jointed to the negative electrode 12. The negative electrode 12 is formed to have a size slightly larger than that of the positive electrode 11 in order to prevent precipitation of lithium. That is, the negative electrode 12 is formed to be longer than the positive electrode 11 in a longitudinal direction and a width direction (transverse direction). The two separators 13 are formed to have a size slightly larger than at least the positive electrode 11, and are arranged so as to sandwich the positive electrode 11, for example.

The non-aqueous electrolyte secondary battery 10 includes insulating plates 18 and 19 arranged above and below the electrode assembly 14, respectively. In the example illustrated in FIG. 1, the positive electrode tab 20 attached to the positive electrode 11 extends through a through-hole of the insulating plate 18 toward a side of the sealing assembly 17, and the negative electrode tab 21 attached to the negative electrode 12 extends through the outside of the insulating plate 19 toward the bottom side of the exterior can 16. The positive electrode tab 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tab 21 is connected to a bottom inner surface of the exterior can 16 by welding or the like, and the exterior can 16 becomes a negative electrode terminal.

The exterior can 16 is, for example, a bottomed cylindrical metal container. A gasket 28 is provided between the exterior can 16 and the sealing assembly 17 to seal the internal space of the battery case 15. The exterior can 16 has, for example, a groove portion 22 for supporting the sealing assembly 17, which is formed by pressing a side portion from the outside. The groove portion 22 is preferably formed in an annular shape along a circumferential direction of the exterior can 16, and supports the sealing assembly 17 on an upper surface thereof.

The sealing assembly 17 has a structure in which a bottom plate 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the respective members except for the insulating member 25 are electrically connected to each other. The lower vent member 24 and the upper vent member 26 are connected to each other at the respective central parts thereof, and the insulating member 25 is interposed between the respective circumferential parts of the vent members 24 and 26. When the internal pressure of the battery is increased due to abnormal heat generation, the lower vent member 24 is deformed so as to push the upper vent member 26 up toward the cap 27 side and is broken, and thus, a current pathway between the lower vent member 24 and the upper vent member 26 is cut off. When the internal pressure is further increased, the upper vent member 26 is broken, and gas is discharged through an opening of the cap 27.

Hereinafter, the positive electrode 11, the negative electrode 12, the separator 13, and the non-aqueous electrolyte constituting the non-aqueous electrolyte secondary battery 10, particularly, the positive electrode active material contained in the positive electrode mixture layer 31 constituting the positive electrode 11 will be described.

### [Positive Electrode]

The positive electrode 11 includes a positive electrode current collector 30 and a positive electrode mixture layer 31 formed on a surface of the positive electrode current collector 30. As the positive electrode current collector 30, a foil of a metal stable in a potential range of the positive electrode 11, such as aluminum or an aluminum alloy, a film in which the metal is disposed on a surface layer, or the like can be used.

The positive electrode mixture layer 31 contains a positive electrode active material and a phosphate. The positive electrode mixture layer 31 may further contain a conductive agent, a binder, and the like. The positive electrode 11 can be manufactured, for example, by applying a positive electrode mixture slurry containing a positive electrode active material, a phosphate, a conductive agent, a binder, and the like onto the surface of the positive electrode current collector 30, drying and then compressing the coating film, and forming the positive electrode mixture layer 31 on both surfaces of the positive electrode current collector 30.

Examples of the conductive agent contained in the positive electrode mixture layer 31 include carbon materials such as carbon black (CB), carbon nanotubes (CNT), graphene, acetylene black (AB), Ketjenblack, and graphite. Examples of the binder contained in the positive electrode mixture layer 31 include a fluorine resin such as polytetrafluoroethylene (PTFE) or polyvinylidene fluoride (PVdF), polyacrylonitrile (PAN), polyimide, an acrylic resin, and a polyolefin. These resins may be used in combination with carboxymethyl cellulose (CMC) or a salt thereof, polyethylene oxide (PEO), or the like.

The positive electrode active material includes a lithium transition metal composite oxide. The lithium transition metal composite oxide has a layered halite structure. Examples of the layered halite structure of the lithium transition metal composite oxide include a layered halite structure belonging to space group R-3m and a layered halite structure belonging to space group C2/m. The lithium transition metal composite oxide preferably has a layered halite structure belonging to space group R-3m from the viewpoint of high capacity and stability of the crystal structure.

The lithium transition metal composite oxide contains, for example, secondary particles formed by aggregation of primary particles. A particle size of the primary particle constituting the secondary particle is, for example, greater than or equal to 0.02 µm and less than or equal to 2 µm. The particle size of the primary particle is a diameter of a circumscribed circle in a particle image observed with a scanning electron microscope (SEM).

The secondary particles of the lithium transition metal composite oxide may be particles having an average particle size of, for example, greater than or equal to 2 µm and less than or equal to 30 µm, preferably greater than or equal to 2 µm and less than or equal to 20 µm, and more preferably greater than or equal to 6 µm and less than or equal to 15 µm. In the present specification, the average particle size means a volume-based median diameter (D50). D50 means a particle size at which a cumulative frequency is 50% from a smaller particle size side in a particle size distribution on a volumetric basis, and is also called a median diameter. The particle size distribution of the secondary particles of the lithium transition metal composite oxide can be measured using a laser diffraction type particle size distribution measuring device (for example, MT3000II manufactured by MicrotracBEL Corp.) with water as a dispersion medium.

The lithium transition metal composite oxide contains at least Ni and Al, and at least one of Ca or Sr.

A content ratio of Ni in the lithium transition metal composite oxide is greater than or equal to 75 mol% with respect to the total amount of metal elements excluding Li. Therefore, the capacity of the battery can be increased. The content ratio of Ni in the lithium transition metal composite oxide may be greater than or equal to 80 mol%, and is preferably greater than or equal to 85 mol% and more preferably greater than or equal to 90 mol%. In addition, the content ratio of Ni in the lithium transition metal composite oxide is preferably less than or equal to 95 mol%.

A content ratio of Al in the lithium transition metal composite oxide is preferably less than or equal to 10 mol%, and more preferably less than or equal to 7 mol%, with respect to the total amount of metal elements excluding Li. It is considered that Al is contained in the transition metal layer in the layered halite structure to stabilize the structure of the transition metal layer since the number of oxides of Al is not changed even during charging and discharging. When the content ratio of Al in the lithium transition metal composite oxide is less than or equal to 10 mol%, the structure of the lithium transition metal composite oxide tends to be unstable, and the effect of improving the discharge capacity by the addition of Sr or Ca to the lithium transition metal composite oxide and the addition of the phosphate to the positive electrode mixture layer is more easily exhibited. In addition, the content ratio of Al in the lithium transition metal composite oxide is preferably greater than or equal to 1 mol% and more preferably greater than or equal to 3 mol%.

A content ratio of Co in the lithium transition metal composite oxide is less than or equal to 5 mol% with respect to the total amount of metal elements excluding Li. Since Co is expensive, the production cost can be reduced by reducing the content ratio of Co. In addition, it is more preferable that the lithium transition metal composite oxide does not substantially contain Co. Here, the phrase "does not substantially contain Co" means that the content ratio of Co in the lithium transition metal composite oxide is less than or equal to 0.01 mol%.

A content ratio of Ca in the lithium transition metal composite oxide is preferably less than or equal to 1.0 mol%, more preferably less than or equal to 0.7 mol%, and still more preferably less than or equal to 0.5 mol%, with respect to the total amount of metal elements excluding Li. In addition, the content ratio of Ca in the lithium transition metal composite oxide is preferably greater than or equal to 0.01 mol%.

A content ratio of Sr in the lithium transition metal composite oxide is preferably less than or equal to 0.3 mol%, more preferably less than or equal to 0.2 mol%, and still more preferably less than or equal to 0.1 mol%, with respect to the total amount of metal elements excluding Li. In addition, the content ratio of Sr in the lithium transition metal composite oxide is preferably greater than or equal to 0.01 mol%.

The total content ratio of Ca and Sr in the lithium transition metal composite oxide may be less than or equal to 1.3 mol% with respect to the total amount of metal elements excluding Li. In addition, the total content ratio of Ca and Sr in the lithium transition metal composite oxide may be greater than or equal to 0.11 mol%. When the lithium transition metal composite oxide contains a predetermined amount of Ca or Sr, the particle strength can be further increased. By increasing the particle strength, occurrence of cracks in the lithium transition metal composite oxide during charging and discharging can be suppressed.

From the viewpoint of improving the particle strength of the lithium transition metal composite oxide, Ca or Sr is preferably present on a surface of the secondary particle of the lithium transition metal composite oxide or an interface where the primary particles of the lithium transition metal composite oxide are in contact with each other. Here, the presence of Ca or Sr on the interface where the primary particles of the lithium transition metal composite oxide are in contact with each other refers to a state in which Ca or Sr is in contact with a grain boundary of the primary particles or a state in which Ca or Sr is in a range of less than or equal to 10 nm from the grain boundary of the primary particles. A part of Ca and Sr may be solid-solved in the lithium transition metal composite oxide. For example, a part of Sr and Nb may be solid-solved in the lithium transition metal composite oxide, and the other part of Sr and Nb may be present on the surface of the primary particle of the lithium transition metal composite oxide.

Ca or Sr may form a Ca compound or a Sr compound on the surface of the secondary particle of the lithium transition metal composite oxide or the interface where the primary particles of the lithium transition metal composite oxide are in contact with each other. Examples of the Ca compound include CaO, Ca(OH)₂, and CaCO₃. Examples of the Sr compound include SrO, Sr(OH)₂, and SrCO₃.

The lithium transition metal composite oxide may further contain M1 (M1 is at least one or more elements selected from Mn, Zr, W, Mo, Ti, and Nb). A content ratio of M1 in the lithium transition metal composite oxide is preferably less than or equal to 20 mol%, more preferably less than or equal to 15 mol%, and still more preferably less than or equal to 10 mol%, with respect to the total amount of metal elements excluding Li.

The lithium transition metal composite oxide may be a composite oxide represented by a general formula LiₐNiₓAl_{y}Co_{z}M1_{w}M2ᵥO_{2-b} (0.8 ≤ a ≤ 1.2, 0.75 ≤ x ≤ 0.95, 0 < y ≤ 0.10, 0 ≤ z ≤ 0.05, 0 ≤ w ≤ 0.20, 0 < v ≤ 0.013, 0 ≤ b < 0.05, x + y + z + w = 1, M1 is at least one or more elements selected from Mn, Zr, W, Mo, Ti, and Nb, and M2 is at least one of Ca or Sr). A mole fraction of the metal elements contained in the entire particles of the lithium transition metal composite oxide is measured by an inductively coupled plasma-atomic emission spectrometer (ICP-AES).

A content ratio of the lithium transition metal composite oxide in the positive electrode active material is, for example, preferably greater than or equal to 90 mass%, and more preferably greater than or equal to 99 mass%, with respect to the total mass of the positive electrode active material, from the viewpoint of improving the capacity of the battery, effectively suppressing deterioration of charge and discharge cycle characteristics, and the like.

In addition, the positive electrode active material of the present embodiment may contain other lithium transition metal composite oxides in addition to the lithium transition metal composite oxide of the present embodiment. Examples of the other lithium transition metal composite oxides include lithium transition metal composite oxides in which a content ratio of Ni is greater than or equal to 0 mol% and less than 75 mol%.

Next, an example of a method for preparing a lithium transition metal composite oxide will be described.

A method for preparing a positive electrode active material may include, for example, a first step of obtaining a composite oxide containing Ni, Al, and any metal element, a second step obtaining a mixture by mixing the composite oxide obtained in the first step with a Li compound, and a third step of firing the mixture.

In the first step, for example, an alkali solution such as sodium hydroxide is added dropwise while stirring a solution of a metal salt containing Ni, Al, and any metal element such as Mn or Co, and a pH is adjusted to an alkali side (for example, 8.5 to 12.5), such that a composite hydroxide containing Ni, Al, and any metal element is precipitated (coprecipitated) and the composite hydroxide is fired. Therefore, a composite oxide containing Ni, Al, and any metal element can be obtained. A firing temperature is not particularly limited, but may be, for example, in a range of higher than or equal to 300°C and lower than or equal to 600°C.

In the second step, a mixture can be obtained by mixing the composite oxide obtained in the first step with a Li raw material and a Ca raw material or a Sr raw material. Examples of the Li raw material include Li₂CO₃, LiOH, Li₂O₂, Li₂O, LiNO₃, LiNO₂, Li₂SO₄, LiOH·H₂O, LiH, and LiF. Examples of the Ca raw material include Ca(OH)₂, CaO, CaCO₃, CaSO₄, and Ca(NO₃)₂, and a particle size is desirably greater than or equal to 0.1 µm and less than or equal to 20 µm. Examples of the Sr raw material include Sr(OH)₂, Sr(OH)₂ ·8H₂O, SrO, SrCO₃, SrSO₄, and Sr(NO₃)₂, and a particle size is desirably greater than or equal to 0.1 µm and less than or equal to 20 µm. A mixing ratio of the composite oxide to the Li raw material, the Ca raw material, or the Sr raw material may be appropriately determined so that each element in the finally obtained lithium transition metal composite oxide is a desired proportion. A molar ratio of Li to the metal elements excluding Li is preferably set so that a molar ratio of the metal elements excluding Li : Li is in a proportion range of 1 : 0.9 to 1 : 1.3. In addition, the amount of Ca added with respect to the total amount of metal elements excluding Li is, for example, less than or equal to 1.0 mol%. The amount of Sr added with respect to the total amount of metal elements excluding Li is, for example, less than or equal to 0.3 mol%. In the second step, when the composite oxide obtained in the first step and the Li compound are mixed, another metal raw material may be added as necessary. The other metal raw material is an oxide or the like containing a metal element other than the metal element constituting the composite oxide obtained in the first step.

In the third step, the lithium transition metal composite oxide according to the present embodiment can be obtained by firing the mixture obtained in the second step in an oxygen atmosphere. In the third step, a temperature rise rate at higher than or equal to 450°C and lower than or equal to 680°C may be in a range of greater than 1.0 °C/min and less than or equal to 5.5 °C/min, and a maximum arrival temperature may be in a range of higher than or equal to 700°C and lower than or equal to 850°C. A temperature rise rate from a temperature higher than 680°C to the maximum arrival temperature may be, for example, greater than or equal to 0.1 °C/min and less than or equal to 3.5 °C/min. In addition, a holding time of the maximum arrival temperature may be longer than or equal to 1 hour and shorter than or equal to 10 hours. In addition, the third step may be multistage firing, and a plurality of first temperature rise rates and a plurality of second temperature rise rates may be set for each temperature region as long as the first temperature rise rate and the second temperature rise rate are within the prescribed ranges.

In the preparation method of the present embodiment, the lithium transition metal composite oxide powder obtained in the third step may be washed with water in order to improve battery capacity and safety. The washing with water can be performed by a known method and conditions, and may be performed within a range in which the battery characteristics are not deteriorated due to elution of lithium from the lithium transition metal composite oxide. In addition, a W raw material may be mixed before and after the washing with water. Examples of the W raw material include tungsten oxide (WO₃) and lithium tungstate (Li₂WO₄, Li₄WO₅, or Li₆W₂O₉). When the W raw material is mixed after washing with water, the W raw material may be mixed after drying, or may be mixed without drying only by solid-liquid separation.

In the positive electrode mixture layer, a content of the phosphate is greater than or equal to 0.1 parts by mass and less than or equal to 5 parts by mass based on 100 parts by mass of a content of the positive electrode active material. When the content of the phosphate is greater than or equal to 0.1 parts by mass and less than or equal to 5 parts by mass, a side reaction between the positive electrode active material and the electrolyte can be suppressed by a coating film formed on a surface of the positive electrode active material. The synergistic effect of this effect and the improvement of the particle strength by Ca or Sr contained in the positive electrode active material improves the discharge capacity of the battery.

Examples of the phosphate contained in the positive electrode mixture layer 31 include lithium phosphate (Li₃PO₄), Li₂HPO₄, LiH₂PO, Na₃PO₄, Mg₃(PO₄)₂·8H₂O, Ca₃(PO₄)₂, Co₃(PO₄)₂·8H₂O, and Mn₃(PO₄)₂. The phosphate contained in the positive electrode mixture layer 31 is preferably lithium phosphate from the viewpoint of battery resistance after formation of the coating film on the positive electrode active material. An average particle size (D50) of the lithium phosphate may be greater than or equal to 0.1 µm and less than or equal to 20 µm. When the average particle size of the lithium phosphate is within the range, it is possible to supply sufficient P for forming the coating film at the time of charging without impairing the conductivity between the positive electrode active materials.

### [Negative Electrode]

The negative electrode 12 includes a negative electrode current collector 40 and a negative electrode mixture layer 41 formed on both surfaces of the negative electrode current collector 40. As the negative electrode current collector 40, a foil of a metal stable in a potential range of the negative electrode 12, such as copper or a copper alloy, a film in which the metal is disposed on a surface layer, or the like can be used. The negative electrode mixture layer 41 may contain a negative electrode active material and a binder. The negative electrode 12 can be manufactured by applying a negative electrode mixture slurry containing a negative electrode active material, a binder, and the like onto the surface of the negative electrode current collector 40, drying and then rolling the coating film, and forming the negative electrode mixture layer 41 on the both surfaces of the negative electrode current collector 40.

The negative electrode active material contained in the negative electrode mixture layer 41 is not particularly limited as long as it can reversibly occlude and release lithium ions, and in general, a carbon material such as graphite is used. The graphite may be any of natural graphite such as flake graphite, massive graphite, and earthy graphite, and artificial graphite such as massive artificial graphite and graphitized mesophase carbon microbeads. In addition, as the negative electrode active material, a metal alloyed with Li such as Si or Sn, a metal compound containing Si or Sn, a lithium titanium composite oxide, or the like may be used. In addition, these negative electrode active materials provided with a carbon coating film may be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with graphite.

As the binder contained in the negative electrode mixture layer 41, a fluorine-containing resin such as PTFE or PVdF, PAN, polyimide, an acrylic resin, a polyolefin, or the like may be used as in the case of the positive electrode 11, and styrene-butadiene rubber (SBR) is preferably used. In addition, the negative electrode mixture layer 41 may contain CMC or a salt thereof, polyacrylic acid (PAA) or a salt thereof, polyvinyl alcohol (PVA), or the like.

### [Separator]

For example, a porous sheet having an ion permeation property and an insulation property is used for the separator 13. Specific examples of the porous sheet include a fine porous thin film, a woven fabric, and a non-woven fabric. As a material of the separator, a polyolefin such as polyethylene or polypropylene, cellulose, and the like are preferable. The separator 13 may have a single-layered structure or a multi-layered structure. In addition, a resin layer having high heat resistance such as an aramid resin and a filler layer containing a filler of an inorganic compound may be provided on a surface of the separator 13.

### [Non-Aqueous Electrolyte]

The non-aqueous electrolyte contains, for example, a non-aqueous solvent and an electrolyte salt dissolved in the non-aqueous solvent. As the non-aqueous solvent, for example, esters, ethers, nitriles such as acetonitrile, amides such as dimethylformamide, a mixed solvent of two or more thereof, and the like can be used. The non-aqueous solvent may contain a halogen-substituted product in which at least some hydrogens in these solvents are substituted with halogen atoms such as fluorine. Examples of the halogen-substituted product include fluorinated cyclic carbonic acid ester such as fluoroethylene carbonate (FEC), fluorinated chain carbonic acid ester, and fluorinated chain carboxylic acid ester such as methyl fluoropropionate (FMP).

Examples of the esters include cyclic carbonates such as ethylene carbonate (EC), propylene carbonate (PC), and butylene carbonate, chain carbonates such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylic acid esters such as γ-butyrolactone (GBL) and γ-valerolactone (GVL), and chain carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is desirably a lithium salt. Examples of the lithium salt include borates such as LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆-ₓ(CₙF₂ₙ₊₁)ₓ (1 < x < 6, n is 1 or 2), LiB₁₀Cl₁₀, LiCl, LiBr, LiI, lithium chloroborane, lithium lower aliphatic carboxylate, Li₂B₄O₇, and Li(B(C₂O₄)F₂), and imide salts such as LiN(SO₂CF₃)₂ and LiN(C₁F₂ₗ₊₁SO₂)(CₘF₂ₘ₊₁SO₂) {l and m are integers greater than or equal to 0}. These lithium salts may be used alone or in combination of multiple types. Among them, LiPF₆ is desirably used from the viewpoint of ion conductivity, electrochemical stability, and the like. A concentration of the lithium salt is, for example, greater than or equal to 0.8 mol and less than or equal to 1.8 mol per 1 L of the non-aqueous solvent. In addition, a vinylene carbonate or propane sultone-based additive may be further added.

### EXAMPLES

Hereinafter, the present disclosure will be further described with reference to Examples and Comparative Examples, but the present disclosure is not limited to the following Examples.

### [Preparation of Positive Electrode Active Material]

### <Example 1>

A composite hydroxide represented by [Ni_{0.92}Al_{0.06}Mn_{0.02}](OH)₂ obtained by a coprecipitation method was fired at 500°C for 8 hours to obtain a composite oxide (Ni_{0.92}Al_{0.06}Mn_{0.02}O₂) (first step). The composite oxide and Sr(OH)₂ were mixed so that a content of Sr was 0.1 mol% with respect to the total amount of Ni, Al, and Mn of the composite oxide, and further, lithium hydroxide (LiOH) was mixed so that a molar ratio of Li to the total amount of Ni, Al, Mn, and Sr was 1 : 1.03 (second step). The mixture was heated from room temperature to 650°C at a temperature rise rate of 2.0 °C/min in an oxygen steam, and then fired from 650°C to 750°C at a temperature rise rate of 0.5 °C/min, thereby obtaining a fired product. The fired product was washed with water to remove impurities, thereby obtaining a positive electrode active material of Example 1 (third step). The results of analyzing the positive electrode active material by ICP-AES are shown in Table 1.

### [Manufacturing of Positive Electrode]

The positive electrode active material, lithium phosphate (Li₃PO₄) having an average particle size of 0.9 µm, acetylene black (AB), and polyvinylidene fluoride (PVdF) were mixed at a solid content mass ratio of 100 : 0.6 : 3 : 2, an appropriate amount of N-methyl-2-pyrrolidone (NMP) was added, and then the mixture was kneaded, thereby preparing a positive electrode mixture slurry. The positive electrode mixture slurry was applied onto both surfaces of a positive electrode core formed of an aluminum foil, the coating film was dried, the coating film was rolled using a roller, and then the coating film was cut into a predetermined electrode size, thereby obtaining a positive electrode in which a positive electrode mixture layer was formed on both surfaces of the positive electrode core. Note that an exposed portion where the surface of the positive electrode core was exposed was provided in a part of the positive electrode.

### [Manufacturing of Negative Electrode]

Natural graphite was used as a negative electrode active material. The negative electrode active material, sodium carboxymethyl cellulose (CMC-Na), and styrene-butadiene rubber (SBR) were mixed in an aqueous solution at a solid content mass ratio of 100 : 1 : 1, thereby preparing a negative electrode mixture slurry. The negative electrode mixture slurry was applied onto both surfaces of a negative electrode core formed of a copper foil, the coating film was dried, the coating film was rolled using a roller, and then the coating film was cut into a predetermined electrode size, thereby obtaining a negative electrode in which a negative electrode mixture layer was formed on both surfaces of the negative electrode core. Note that an exposed portion where the surface of the negative electrode core was exposed was provided in a part of the negative electrode.

### [Preparation of Non-Aqueous Electrolyte]

Lithium hexafluorophosphate (LiPF₆) was dissolved in a mixed solvent obtained by mixing ethylene carbonate (EC), methyl ethyl carbonate (MEC), and dimethyl carbonate (DMC) at a volume ratio of 3 : 3 : 4 so that a concentration thereof was 1.2 mol/liter, thereby preparing a non-aqueous electrolyte.

### [Manufacturing of Test Cell (Non-Aqueous Electrolyte Secondary Battery)]

An aluminum lead and a nickel lead were attached to the exposed portion of the positive electrode and the exposed portion of the negative electrode, respectively, and the positive electrode and the negative electrode were spirally wound with a polyolefin separator interposed therebetween and then press-molded in a radial direction, thereby manufacturing a flat wound electrode assembly. The electrode assembly was housed in an exterior body configured by an aluminum laminate sheet, the non-aqueous electrolyte was injected, and then an opening of the exterior body was sealed, thereby obtaining a test cell.

### [Evaluation of Charge Capacity and Discharge Capacity]

The test cell was subjected to constant current charge at a constant current of 0.3 It until a cell voltage reached 4.2 V, and then was subjected to constant voltage charge at 4.2 V until a current value reached 1/50 It, under a temperature environment at 25°C, and a charge capacity was measured. Thereafter, constant current discharge was performed at a constant current of 0.1 It until a cell voltage reached 2.5 V, and a discharge capacity was measured.

### <Examples 2 and 3 and Comparative Examples 1 to 3>

Test cells were manufactured and evaluated in the same manner as that of Example 1 except that a mixing ratio of Li₃PO₄ was changed as shown in Table 1 in the manufacturing of the positive electrode.

### <Example 4 and Comparative Example 4>

Test cells were manufactured and evaluated in the same manner as that of Example 1 except that Sr(OH)₂ was mixed so that the content of Sr was 0.3 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Example 5 and Comparative Example 5>

Test cells were manufactured and evaluated in the same manner as that of Example 1 except that Sr(OH)₂ was mixed so that the content of Sr was 0.01 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Examples 6 to 8 and Comparative Examples 6 to 8>

Test cells were manufactured and evaluated in the same manner as that of Example 1 except that Sr was not added and Ca(OH)₂ was mixed so that the content of Ca was 0.5 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Example 9 and Comparative Example 9>

Test cells were manufactured and evaluated in the same manner as that of Example 1 except that Sr was not added and Ca(OH)₂ was mixed so that the content of Ca was 1.0 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Example 10 and Comparative Example 10>

Test cells were manufactured and evaluated in the same manner as that of Example 1 except that Sr was not added and Ca(OH)₂ was mixed so that the content of Ca was 0.01 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Example 11 and Comparative Example 11>

Test cells were manufactured and evaluated in the same manner as that of Example 1 except that Sr was not added and Ca(OH)₂ was mixed so that the content of Ca was 0.5 mol% with respect to the total amount of Ni, Al, and Mn of the composite oxide in the second step of the preparation of the positive electrode active material, and the mixing ratio of Li₃PO₄ was changed as shown in Table 1 in the manufacturing of the positive electrode.

### <Example 12 and Comparative Example 12>

Test cells were manufactured and evaluated in the same manner as that of Example 1 except that the composition of the composite oxide prepared in the first step of the preparation of the positive electrode active material was changed to Ni_{0.84}Al_{0.06}Mn_{0.10}O₂, and the mixing ratio of Li₃PO₄ was changed as shown in Table 2 in the manufacturing of the positive electrode.

### <Example 13 and Comparative Example 13>

Test cells were manufactured and evaluated in the same manner as that of Example 1 except that the composition of the composite oxide prepared in the first step of the preparation of the positive electrode active material was changed to Ni_{0.80}Al_{0.01}Mn_{0.19}O₂, and the mixing ratio of Li₃PO₄ was changed as shown in Table 3 in the manufacturing of the positive electrode.

### <Example 14 and Comparative Example 14>

Test cells were manufactured and evaluated in the same manner as that of Example 1 except that the composition of the composite oxide prepared in the first step of the preparation of the positive electrode active material was changed to Ni_{0.75}Al_{0.10}Mn_{0.15}O₂, and the mixing ratio of Li₃PO₄ was changed as shown in Table 4 in the manufacturing of the positive electrode.

### <Example 15 and Comparative Example 15>

Test cells were manufactured and evaluated in the same manner as that of Example 1 except that the composition of the composite oxide prepared in the first step of the preparation of the positive electrode active material was changed to Ni_{0.75}Al_{0.05}Mn_{0.20}O₂, and the mixing ratio of Li₃PO₄ was changed as shown in Table 5 in the manufacturing of the positive electrode.

### <Reference Examples 1 and 2>

Test cells were manufactured and evaluated in the same manner as that of Example 1 except that the composition of the composite oxide prepared in the first step of the preparation of the positive electrode active material was changed to Ni_{0.60}Al_{0.10}Mn_{0.30}O₂, and the mixing ratio of Li₃PO₄ was changed as shown in Table 6 in the manufacturing of the positive electrode.

The charge capacities and the discharge capacities in Examples and Comparative Examples are shown separately in Tables 1 to 6. In addition, Tables 1 to 6 also show the composition of the positive electrode active material analyzed by ICP-AES and the mixing ratio of Li₃PO₄. The charge capacities and the discharge capacities in Examples 1 to 11 and Comparative Examples 2 to 11 shown in Table 1 are relatively represented by setting the reaction resistance and the capacity retention rate in Comparative Example 1 to 100.

The reaction resistance and the capacity retention rate of the test cell of Example 12 shown in Table 2 are relatively represented by setting the reaction resistance and the capacity retention rate in Comparative Example 12 to 100.

The reaction resistance and the capacity retention rate of the test cell of Example 13 shown in Table 3 are relatively represented by setting the reaction resistance and the capacity retention rate in Comparative Example 13 to 100.

The reaction resistance and the capacity retention rate of the test cell of Example 14 shown in Table 4 are relatively represented by setting the reaction resistance and the capacity retention rate in Comparative Example 14 to 100.

The reaction resistance and the capacity retention rate of the test cell of Example 15 shown in Table 5 are relatively represented by setting the reaction resistance and the capacity retention rate in Comparative Example 15 to 100.

The reaction resistance and the capacity retention rate of the test cell of Reference Example 2 shown in Table 6 are relatively represented by setting the reaction resistance and the capacity retention rate of Reference Example 1 to 100.

**[Table 1]**

| | Positive electrode active material composition mol% | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Example 1 | 92 | 6 | 2 | 0.1 | 0 | 0.6 | 105 | 100 |
| Example 2 | 92 | 6 | 2 | 0.1 | 0 | 0.1 | 104 | 100 |
| Example 3 | 92 | 6 | 2 | 0.1 | 0 | 5 | 103 | 100 |
| Comparative Example 1 | 92 | 6 | 2 | 0.1 | 0 | 0 | 100 | 100 |
| Comparative Example 2 | 92 | 6 | 2 | 0.1 | 0 | 5.5 | 100 | 100 |
| Comparative Example 3 | 92 | 6 | 2 | 0.1 | 0 | 0.05 | 100 | 100 |
| Example 4 | 92 | 6 | 2 | 0.3 | 0 | 0.6 | 103 | 100 |
| Comparative Example 4 | 92 | 6 | 2 | 0.3 | 0 | 0 | 100 | 100 |
| Example 5 | 92 | 6 | 2 | 0.01 | 0 | 0.6 | 102 | 100 |
| Comparative Example 5 | 92 | 6 | 2 | 0.01 | 0 | 0 | 100 | 100 |
| Example 6 | 92 | 6 | 2 | 0 | 0.5 | 0.6 | 104 | 99 |
| Example 7 | 92 | 6 | 2 | 0 | 0.5 | 0.1 | 102 | 99 |
| Example 8 | 92 | 6 | 2 | 0 | 0.5 | 5 | 103 | 99 |
| Comparative Example 6 | 92 | 6 | 2 | 0 | 0.5 | 0 | 99 | 99 |
| Comparative Example 7 | 92 | 6 | 2 | 0 | 0.5 | 5.5 | 99 | 99 |
| Comparative Example 8 | 92 | 6 | 2 | 0 | 0.5 | 0.05 | 99 | 99 |
| Example 9 | 92 | 6 | 2 | 0 | 1.0 | 0.6 | 102 | 99 |
| Comparative Example 9 | 92 | 6 | 2 | 0 | 1.0 | 0 | 99 | 99 |
| Example 10 | 92 | 6 | 2 | 0 | 0.01 | 0.6 | 101 | 100 |
| Comparative Example 10 | 92 | 6 | 2 | 0 | 0.01 | 0 | 100 | 100 |
| Example 11 | 92 | 6 | 2 | 0.1 | 0.5 | 0.6 | 103 | 99 |
| Comparative Example 11 | 92 | 6 | 2 | 0.1 | 0.5 | 0 | 99 | 99 |

**[Table 2]**

| | Positive electrode active material composition [mol%] | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Example 12 | 84 | 6 | 10 | 0.1 | 0 | 0.6 | 103 | 100 |
| Comparative Example 12 | 84 | 6 | 10 | 0.1 | 0 | 0 | 100 | 100 |

**[Table 3]**

| | Positive electrode active material composition [mol%] | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Example 13 | 80 | 1 | 19 | 0.1 | 0 | 0.6 | 102 | 100 |
| Comparative Example 13 | 80 | 1 | 19 | 0.1 | 0 | 0 | 100 | 100 |

**[Table 4]**

| | Positive electrode active material composition mol%] | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Example 14 | 75 | 10 | 15 | 0.1 | 0 | 0.6 | 101 | 100 |
| Comparative Example 14 | 75 | 10 | 15 | 0.1 | 0 | 0 | 100 | 100 |

**[Table 5]**

| | Positive electrode active material composition [mol%] | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Example 15 | 75 | 5 | 20 | 0.1 | 0 | 0.6 | 101 | 100 |
| Comparative Example 15 | 75 | 5 | 20 | 0.1 | 0 | 0 | 100 | 100 |

**[Table 6]**

| | Positive electrode active material composition [mol%] | | | | | Li₃PO₄ content ratio (/positive electrode active material) [parts by mass] | Discharge capacity | Charge capacity |
|---|---|---|---|---|---|---|---|---|
| | Ni | Al | Mn | Sr | Ca | | | |
| Reference Example 1 | 60 | 10 | 30 | 0.1 | 0 | 0.6 | 100 | 100 |
| Reference Example 2 | 60 | 10 | 30 | 0.1 | 0 | 0 | 100 | 100 |

The discharge capacities in Examples were higher than those in Comparative Examples. From this result, it was found that the discharge capacity of the battery was improved when a high-Ni-containing lithium transition metal composite oxide containing Ca or Sr and a phosphate were contained in the positive electrode mixture layer.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Exterior can
- 17: Sealing assembly
- 18, 19: Insulating plate
- 20: Positive electrode tab
- 21: Negative electrode tab
- 22: Groove portion
- 23: Bottom plate
- 24: Lower vent member
- 25: Insulating member
- 26: Upper vent member
- 27: Cap
- 28: Gasket
- 30: Positive electrode current collector
- 31: Positive electrode mixture layer
- 40: Negative electrode current collector
- 41: Negative electrode mixture layer

## Claims

1. A positive electrode for a non-aqueous electrolyte secondary battery, comprising a positive electrode current collector, and a positive electrode mixture layer formed on a surface of the positive electrode current collector,
wherein the positive electrode mixture layer contains a positive electrode active material containing a lithium transition metal composite oxide having a layered halite structure, and a phosphate,
the lithium transition metal composite oxide contains at least Ni and Al, and at least one of Ca or Sr,
a content ratio of Ni in the lithium transition metal composite oxide is greater than or equal to 75 mol% with respect to the total amount of metal elements excluding Li, and
in the positive electrode mixture layer, a content of the phosphate is greater than or equal to 0.1 parts by mass and less than or equal to 5 parts by mass based on 100 parts by mass of a content of the positive electrode active material.

2. The positive electrode for a non-aqueous electrolyte secondary battery according to claim 1, wherein the phosphate is lithium phosphate having an average particle size of greater than or equal to 0.1 µm and less than or equal to 20 µm.

3. The positive electrode for a non-aqueous electrolyte secondary battery according to claim 1 or 2,
wherein the lithium transition metal composite oxide contains secondary particles formed by aggregation of primary particles, and
the at least one of Ca or Sr is present on a surface of the secondary particle or an interface at which the primary particles are in contact with each other.

4. The positive electrode for a non-aqueous electrolyte secondary battery according to any one of claims 1 to 3, wherein a content ratio of Ca in the lithium transition metal composite oxide is less than or equal to 1.0 mol% with respect to the total amount of metal elements excluding Li.

5. The positive electrode for a non-aqueous electrolyte secondary battery according to any one of claims 1 to 4, wherein a content ratio of Sr in the lithium transition metal composite oxide is less than or equal to 0.3 mol% with respect to the total amount of metal elements excluding Li.

6. The positive electrode for a non-aqueous electrolyte secondary battery according to any one of claims 1 to 5, wherein the lithium transition metal composite oxide is represented by a general formula LiₐNiₓAl_{y}Co_{z}M1_{w}M2ᵥO_{2-b} (0.8 ≤ a ≤ 1.2, 0.75 ≤ x ≤ 0.95, 0 < y < 0.10, 0 ≤ z ≤ 0.05, 0 ≤ w ≤ 0.20, 0 < v ≤ 0.013, 0 ≤ b < 0.05, x + y + z + w = 1, M1 is at least one or more elements selected from Mn, Zr, W, Mo, Ti, and Nb, and M2 is at least one of Ca or Sr).

7. A non-aqueous electrolyte secondary battery comprising the positive electrode for a non-aqueous electrolyte secondary battery according to any one of claims 1 to 6, a negative electrode, and a non-aqueous electrolyte.
